# EUROPEAN PATENT APPLICATION

(11) **EP 4 223 729 A1**
(43) Date of publication of application: **09.08.2023**
(21) Application number: 21875760.7
(22) Date of filing: 30.09.2021
(51) Int. Cl.: C06B 31/00, C06B 43/00, C06D 5/00, B60R 21/264

(54) **GAS-FORMING AGENT COMPOSITION**

(30) Priority: 01.10.2020 JP 2020166772; 12.04.2021 JP 2021067042
(71) Applicant: Daicel Corporation, Osaka 530-0011 (JP)
(72) Inventor: FUJISAKI, Youji, Tokyo 108-8230 (JP); FUJINO, Ayumi, Tokyo 108-8230 (JP); NAKAI, Shunji, Tokyo 108-8230 (JP)
(74) Representative: Grünecker Patent- und Rechtsanwälte PartG mbB
(86) International application number: PCT/JP2021/036043
(87) International publication number: WO 2022/071464

(57) **Abstract**

Provided is a gas-generating agent composition containing the components (a) to (d) below, in which a content of the following (d) calcium carbonate is 5 mass% or less: (a) guanidine nitrate; (b) a basic metal nitrate; (c) a binder; and (d) calcium carbonate.

## Description

### Technical Field

The present disclosure relates to a gas-generating agent composition.

### Background Art

In an inflator using a gas-generating agent composition, which is used in a vehicle safety device such as an airbag device mounted on a vehicle, an attempt is being made to ensure the reliability of the product. For example, an attempt is being made to lower the burning temperature of a gas-generating agent composition, improve the ignitability, and reduce a pressure index (Patent Document 1). It is known that a burn rate of a gas-generating agent composition varies in a range of the power of a pressure exponent n as expressed by the following equation due to the pressure variation in the inflator.

The invention disclosed in Patent Document 1 solves the issue by setting a ratio between melamine cyanurate and nitroguanidine in a specific range as a solution.

### PRIOR ART DOCUMENT

### PATENT DOCUMENT

[Patent Document 1] JP 2012-211064 A

### SUMMARY OF THE INVENTION

### PROBLEMS TO BE SOLVED BY THE INVENTION

A characteristic suitable for an airbag device to be mounted on a vehicle includes having a longest possible retention time in operation. A retention time can be increased by adjusting the combustion completion time of an inflator. The combustion completion time of an inflator can be adjusted by a method such as adjusting the burn rate and/or the shape of the gas-generating agent composition. In setting a certain combustion completion time as a target time, if a gas-generating agent composition having a low burn rate is used, the shape of the gas-generating agent composition can be made small. If the shape of the gas-generating agent composition can be made small, a small and lightweight inflator can be provided. Therefore, a technique for controlling the burn rate of the gas-generating agent composition within a low level is optimal. In addition, the gas-generating agent composition is also preferable to have good ignitability.

In view of the above, an object of the present disclosure is to provide a gas-generating agent composition having a low burn rate but good ignitability.

### MEANS FOR SOLVING THE PROBLEMS

As a result of intensive studies to solve the above issues, the present inventors have found that a gas-generating agent composition having a low burn rate but good ignitability can be obtained by using calcium carbonate as an additive for the gas-generating agent composition and setting its amount to be added to a predetermined range.

In particular, it has been found that, in a gas-generating agent composition containing guanidine nitrate as a fuel and a basic metal nitrate as an oxidizing agent, the burn rate of the gas-generating agent composition decreased when calcium carbonate is added. On the other hand, a low burn rate cannot be obtained when the calcium carbonate content is excessively large. In addition, it has been found that when the calcium carbonate content in the gas-generating agent composition is set to a predetermined amount, the gas-generating agent composition has good ignitability. In the present specification, good ignitability is synonymous with short ignition time.

The present disclosure relates to the following contents:
[1] A gas-generating agent composition including components (a) to (d) below, wherein a content of the following component (d) calcium carbonate is 5 mass% or less:
   (a) guanidine nitrate;
   (b) a basic metal nitrate;
   (c) a binder; and
   (d) calcium carbonate.
[2] The gas-generating agent composition according to [1], wherein
   a content of (a) the guanidine nitrate is 20 mass% or more and 60 mass% or less,
   a content of (b) the basic metal nitrate is 35 mass% or more and 75 mass% or less, and
   a content of (c) the binder is 0.1 mass% or more and 10 mass% or less.
[3] The gas-generating agent composition according to [1] or [2], wherein (b) the basic metal nitrate is basic copper nitrate, and (c) the binder is carboxymethyl cellulose.
[4] The gas-generating agent composition according to any one of [1] to [3], wherein a content of (d) the calcium carbonate is 0.1 mass% or more and 5 mass% or less.
[5] An inflator comprising the gas-generating agent composition according to any one of [1] to [4].

### EFFECT OF THE INVENTION

According to the present disclosure, a gas-generating agent composition having a low burn rate and good ignitability can be provided.

### BRIEF DESCRIPTION OF DRAWINGS

FIG. 1 is a chart illustrating a relationship between the calcium carbonate content and the burn rate of a gas-generating agent composition after molding.
FIG. 2 is a chart illustrating a relationship between the calcium carbonate content and the ignition time of a gas-generating agent composition after molding.

### MODE FOR CARRYING OUT THE INVENTION

Hereinafter, an embodiment of the present disclosure will be described.

### (a) Fuel

A fuel, which is a component (a) according to an embodiment of the present disclosure, contains guanidine nitrate. Since guanidine nitrate contains oxygen in the molecule, there are advantages such as reducing a blending amount for an oxidizing agent component, obtaining good thermal stability, reducing costs, and being able to expect a high gasification rate during combustion.

In the present disclosure, guanidine nitrate is preferably in the form of powder or granules because it is easy to handle, and the lower limit of the 50% particle size is usually 5 µm or more, and preferably 10 µm or more, and the upper limit is usually 80 µm or less, and preferably 50 µm or less. If the 50% particle size of guanidine nitrate is excessively large, the strength of the molded article of the gas-generating agent composition is lowered, whereas if it is excessively small, the cost of pulverization would be high. In the present disclosure, the 50% particle size means a 50% particle size based on the number of measured particles, which can be determined by, for example, a laser diffraction/scattering method.

The lower limit of the content percentage (blending ratio) of guanidine nitrate in the gas-generating agent composition according to an embodiment of the present disclosure is usually 20 mass% or more, and preferably 30 mass% or more, and the upper limit is usually 60 mass% or less, and preferably 55 mass% or less. When the content percentage (blending ratio) of guanidine nitrate is less than 20 mass%, the number of moles of generated gas per 100 g of the gas-generating agent composition decreases, and the generation of nitrogen oxides tends to increase due to excess oxygen. Meanwhile, when the content percentage (blending ratio) of guanidine nitrate exceeds 60 mass%, the amount of the oxidizing agent component becomes insufficient, so that an amount of harmful carbon monoxide to be generated tends to be large.

Further, other known fuels may be included within a range in which the issues of the present disclosure can be solved.

Examples of those other known fuels include one or more selected from tetrazole compounds including 5-aminotetrazole and bitetrazole ammonium salts; guanidine compounds including guanidine nitrate and dicyandiamide (excluding nitroguanidine); and triazine compounds including melamine, trimethylolmelamine, alkylated methylolmelamine, ammeline, ammeland, melamine nitrate, melamine perchlorate, trihydrazinotriazine, and melamine nitrated compounds.

### (b) Oxidizing agent

The oxidizing agent, which is the component (b) according to an embodiment of the present disclosure, includes a basic metal nitrate and optionally other oxidizing agents. By using a basic metal nitrate as the component (b), the burning temperature can be lowered.

Examples of the basic metal nitrate include one or more selected from basic copper nitrate, basic cobalt nitrate, basic zinc nitrate, and basic manganese nitrate, and among them, basic copper nitrate is preferable. Examples of the other oxidizing agents include metal nitrate, ammonium nitrate, metal perchlorate, ammonium perchlorate, metal nitrite, and metal chlorate.

The oxidizing agent content is usually in a range of 35 mass% or more and preferably 75 mass% or less with respect to the gas-generating agent composition, and is more preferably set in a range of 40 mass% or more and 75 mass% or less in order to reduce the concentrations of carbon monoxide and nitrogen oxide in the generated gas.

### (c) Binder

Examples of the binder for the component (c) according to an embodiment of the present disclosure include one or more selected from carboxymethyl cellulose (CMC), a carboxymethyl cellulose sodium salt (CMCNa), a carboxymethyl cellulose potassium salt, a carboxymethyl cellulose ammonium salt, cellulose acetate, cellulose acetate butyrate (CAB), ethylcellulose (EC), hydroxyethylcellulose (HEC), microcrystalline cellulose, polyacrylhydrazide, an acrylamide-acrylic acid metal salt copolymer, a polyacrylamide-polyacrylic acid ester compound copolymer, acrylic rubber, and silicone. Among these, a CMCNa is preferable.

The lower limit of the content of the binder as the component (c) in the gas-generating agent composition of the present disclosure is usually 0.1 mass% or more, and preferably 1 mass% or more, and the upper limit is usually 10 mass% or less, and preferably 8 mass% or less.

### (d) Calcium carbonate

The calcium carbonate as a component (d) according to an embodiment of the present disclosure is added to ensure a low burn rate of the gas-generating agent composition and a short ignition time.

The content of (d) calcium carbonate in the gas-generating agent composition of the present disclosure is 5 mass% or less, preferably less than 4 mass%, more preferably less than 3 mass%, and may be less than 2 mass%.

At the time of combustion of the gas-generating agent composition, the base from the calcium carbonate promotes a rate-determining process of the combustion reaction, thereby improving the ignitability. In particular, since the pH of the entire gas-generating agent composition can be controlled even with a relatively small amount of calcium carbonate, a sufficient effect can be obtained even with a content of, for example, 5 mass% or less.

Meanwhile, when the amount of calcium carbonate to be added to the gas-generating agent composition is excessively large, the burning temperature during combustion tends to decrease, and when the burn rate decreases, the ignitability of the gas-generating agent composition also tends to decrease. Therefore, it is important that the content of calcium carbonate in the gas-generating agent composition according to an embodiment of the present disclosure is 5 mass% or less. Within this range, the ignition time improves particularly in a low-temperature environment. The combustion of the gas-generating agent composition is easily affected by the external environment, and in general, in a low temperature environment, ignition and combustion continuation are disadvantageous as compared with normal temperature and high temperature. In order to reduce the difference in performance depending upon the temperature, it is important to improve the ignitability in a low-temperature environment.

From the viewpoint of maintaining a low burn rate and good ignitability of the gas-generating agent composition, the calcium carbonate content is preferably 0.1 mass% or more, preferably 0.3 wt% or more, and more preferably 0.5 wt% or more.

For the calcium carbonate according to an embodiment of the present disclosure, a commercially available product can be used.

### Other components

The gas-generating agent composition of the present disclosure can include various known additives for the purpose of adjusting the burn rate of the gas-generating agent composition and cleaning the combustion gas within a range in which the issues of the present disclosure can be solved. Examples of those known additives include metal oxides such as cupric oxide, iron oxide, zinc oxide, cobalt oxide, manganese oxide, molybdenum oxide, nickel oxide, bismuth oxide, silica, and alumina; metal hydroxides such as aluminum hydroxide, magnesium hydroxide, cobalt hydroxide, and iron hydroxide; cobalt carbonate and calcium carbonate; complex compounds of metal oxide or hydroxide such as acid clay, kaolin, talc, bentonite and diatomaceous earth; metal acid salts such as sodium silicate, mica molybdate, cobalt molybdate, and ammonium molybdate; molybdenum disulfide, calcium stearate, silicon nitride, silicon carbide, metaboric acid, boric acid, and boric anhydride.

The gas-generating agent composition of the present disclosure can be molded into a desired shape, and can be molded into a single-hole cylindrical shape, a porous cylindrical shape, or a pellet-like molded article. These molded articles can be produced by a method in which water or an organic solvent is added to and mixed with the gas-generating agent composition and a mixture is subjected to extrusion molding (molded articles having a single-hole cylindrical shape or a porous cylindrical shape) or compression molding using a tableting machine or the like (molded articles in the molded article of pellets).

The gas-generating agent composition according to the present disclosure or the molded article obtained therefrom can be applied to, for example, an inflator for a driver's seat airbag, an inflator for a front passenger seat airbag, an inflator for a side airbag, an inflator for an inflatable curtain, an inflator for a knee bolster, an inflator for an inflatable seat belt, an inflator for a tubular system, and an inflator for a pretensioner of various vehicles. The gas-generating agent composition according to the present disclosure or a molded article obtained therefrom can be preferably applied to an inflator for a side airbag, which requires early deployment, among these.

In addition, the inflator including the gas-generating agent composition according to the present disclosure or the molded article obtained therefrom may be either a pyrotechnic type in which the gas is supplied only from the gas-generating agent or a hybrid type in which the gas is supplied from both a compressed gas such as argon and the gas generating agent.

The gas-generating agent composition according to the present disclosure or a molded article obtained therefrom can also be used as an ignition agent called an enhancer agent (or booster) or the like for transmitting energy of a detonator or squib to a gas generating agent.

Each of the configurations, combinations thereof, and the like in each embodiment are an example, and various additions, omissions, substitutions, and other changes may be made as appropriate without departing from the spirit of the present invention. The present disclosure is not limited by the embodiments and is limited only by the claims.

### EXAMPLES

Hereinafter, the present disclosure will be specifically described with reference to examples. However, the present disclosure is not limited to the embodiments in the following examples.

### <Preparation of gas-generating agent composition>

A gas-generating agent composition before molding having the composition listed in Table 1 was prepared.

**[Table 1]**

| Sample | (a) Guanidine nitrate mass% | (b) Basic copper nitrate mass% | (c) Binder mass% | (d) Calcium carbonate mass% | Performance (with respect to Comparative Example 1) | |
|---|---|---|---|---|---|---|
| | | | | | Burn rate (mm/sec) | Ignition time (msec) |
| Comparative Example 1 | 43.0 | 52.0 | 5.0 | - | 100% | 100% |
| Comparative Example 2 | 38.6 | 47.4 | 5.0 | 9.0 | 69% | 116% |
| Example 1 | 40.8 | 49.3 | 5.0 | 4.9 | 83% | 74% |
| Example 2 | 41.9 | 50.4 | 5.0 | 2.7 | 97% | 68% |

| | | | | | | |
|---|---|---|---|---|---|---|
| * The binder is carboxymethyl cellulose. | | | | | | |

### Molding into cylindrical strand

Water was added and mixed with each of the gas-generating agent compositions of examples and comparative examples listed in Table 1, and the mixture was subjected to extrusion molding, cutting, and drying to obtain a single-hole molded article.

The obtained single-hole molded article was ground in an agate mortar, and the powder passed through a wire mesh having an opening of 500 µm was filled in a mortar side of a predetermined mold.

Next, a punch-side end surface was compressed and held at a pressure of 14.7 MPa for 5 seconds by a hydraulic pump, and then taken out and molded into a cylindrical strand having an outer diameter of 9.6 ± 0.1 mm and a length of 12.7 ± 1.0 mm to obtain a gas-generating agent composition after molding.

### Method for measuring burn rate

The cylindrical strand as a sample was placed in an SUS-made closed bomb having an inner volume of 1 L, and the inside of the bomb was completely substituted with nitrogen gas while the pressure was stabilized to 7 MPa. Thereafter, a predetermined electric current was passed through the nichrome wire in contact with the end face of the strand, and the wire was ignited and fired by the fusing energy. The pressure behavior over time in the bomb was confirmed by a chart of a recorder, the elapsed time from the start of combustion to the pressure rise peak was confirmed from the scale of the chart, and the value calculated by dividing the strand length before combustion by this elapsed time was taken as the burn rate. The results of the examples and comparative examples are listed in Table 1. The burn rate is listed as a ratio (%) to the burn rate (mm/sec) of Comparative Example 1.

### Method for measuring ignition time

A predetermined amount of a gas generating agent for evaluation of a single-hole molded article obtained by extrusion molding was charged into a 5 cc bomb test jig, and ignited with an ignition chemical containing ZPP under a low-temperature environment (-35°C), and the time when the gas generating agent reaches 10% pressure of the maximum pressure was defined as an ignition time. The ignition time was not an absolute value, but a ratio (%) to the ignition time (msec) of Comparative Example 1 was listed.

From the comparison of the results of Examples 1 and 2, and Comparative Example 1 in Table 1, it was found that when calcium carbonate was added to the gas-generating agent composition, the burn rate was decreased, while the ignition time was shortened.

If the results of Examples 1 and 2 and Comparative Examples 2 to 5 were compared, it was found that when the calcium carbonate content was 5 mass%, the burn rate of the gas-generating agent composition was low, while the ignition time was short. Meanwhile, when the calcium carbonate content was more than 5 mass%, a low burn rate and a short ignition time of the gas-generating agent composition were not obtained.

### Preparation of Comparative Examples 3 to 5

A gas-generating agent composition before molding having the composition listed in Table 2 was prepared. The preparation method is the same as that of the gas-generating agent composition of Table 1. These gas-generating agent compositions before molding were molded into cylindrical strands in the same manner as in Example 1 and the like to obtain gas-generating agent compositions after molding. For each gas-generating agent composition after molding, the burn rate and ignition time were measured by the above-mentioned methods. The results are listed in Table 2.

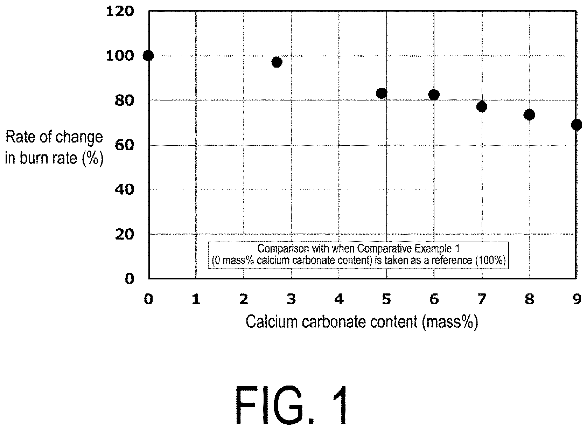

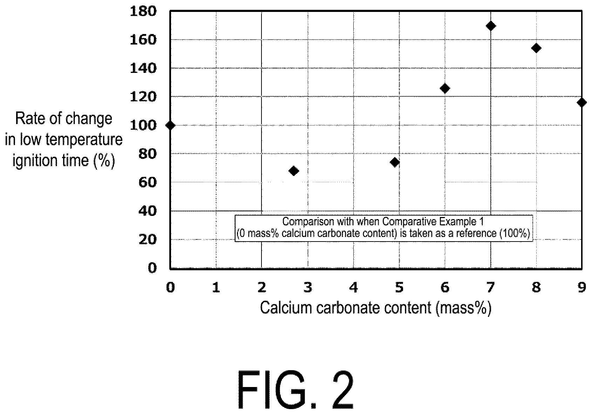

The burn rate and the ignition time are listed as ratios (%) to the burn rate (mm/sec) and the ignition time (msec) of Comparative Example 1, respectively. The results of Examples 1 and 2 and Comparative Examples 1 to 5 are summarized in FIGS. 1 and 2. In FIG. 1, the horizontal axis represents the calcium carbonate content, and the vertical axis represents the rate of change (%) of the burn rate from Comparative Example 1. In FIG. 2, the horizontal axis represents the calcium carbonate content, and the vertical axis represents the rate of change (%) of the ignition time from Comparative Example 1.

**[Table 2]**

| Sample | (a) Guanidine nitrate mass% | (b) Basic copper nitrate mass% | (c) Binder mass% | (d) Calcium carbonate mass% | Performance (with respect to Comparative Example 1) | |
|---|---|---|---|---|---|---|
| | | | | | Burn rate (mm/sec) | Ignition time (msec) |
| Comparative Example 3 | 39.1 | 47.9 | 5.0 | 8.0 | 73% | 154% |
| Comparative Example 4 | 39.7 | 48.4 | 5.0 | 7.0 | 77% | 170% |
| Comparative Example 5 | 40.2 | 48.8 | 5.0 | 6.0 | 82% | 126% |

From the results of Tables 1 and 2 and FIGS. 1 and 2, it was found that when the calcium carbonate content in the gas-generating agent composition was more than 5 wt%, the ignition time was significantly longer than those of Examples 1 and 2 although the burn rate was decreased. That is, it was confirmed that the reduction of the burn rate and the short ignition time was not able to be achieved unless the calcium carbonate content was 5 wt or less.

### INDUSTRIAL APPLICABILITY

According to the present disclosure, a gas-generating agent composition having a low burn rate and a short ignition time can be provided.

## Claims

1. A gas-generating agent composition comprising components (a) to (d) below, wherein a content of the following component (d) calcium carbonate is 5 mass% or less:
(a) guanidine nitrate;
(b) a basic metal nitrate;
(c) a binder; and
(d) calcium carbonate.

2. The gas-generating agent composition according to claim 1, wherein
a content of (a) the guanidine nitrate is 20 mass% or more and 60 mass% or less,
a content of (b) the basic metal nitrate is 35 mass% or more and 75 mass% or less, and
a content of (c) the binder is 0.1 mass% or more and 10 mass% or less.

3. The gas-generating agent composition according to claim 1 or 2, wherein (b) the basic metal nitrate is basic copper nitrate, and (c) the binder is carboxymethyl cellulose.

4. The gas-generating agent composition according to any one of claims 1 to 3,
wherein a content of (d) the calcium carbonate is 0.1 mass% or more and 5 mass% or less.

5. An inflator comprising the gas-generating agent composition according to any one of claims 1 to 4.
